# EUROPEAN PATENT SPECIFICATION

(11) **EP 3 834 621 B1**
(45) Date of publication and mention of the grant of the patent: **07.08.2024**
(21) Application number: 20213193.4
(22) Date of filing: 10.12.2020
(51) Int. Cl.: A23G 9/08, A23G 9/22, A23G 9/28

(54) **WHIPPING MACHINE FOR PRODUCING ICE CREAM AND SIMILAR PRODUCTS**
AUFSCHLAGMASCHINE ZUR HERSTELLUNG VON EISCREMES UND ÄHNLICHEN PRODUKTEN
MACHINE À FOUETTER POUR LA PRODUCTION DE CRÈME GLACÉE ET PRODUITS SIMILAIRES

(30) Priority: 10.12.2019 IT 201900023502
(43) Date of publication of application: 16.06.2021
(73) Proprietor: Valmar Global VSE ZA Sladoled D.O.O., 5293 Volcja Draga (SI)
(72) Inventor: JEJCIC, Valter, 5000 NOVA GORICA (SI)
(74) Representative: Studio Torta S.p.A.

(56) References cited:
- EP-A1- 2 484 224
- EP-A1- 2 708 141
- EP-A2- 2 095 720
- EP-B1- 2 484 224
- EP-B1- 2 708 141
- IT-A1- MI20 010 144
- US-A- 4 364 666

## Description

### CROSS-REFERENCE TO RELATED APPLICATIONS

This patent application claims priority from Italian patent application no. 102019000023502 filed on 10/12/2019.

### TECHNICAL FIELD

The present invention relates to a batch-freezer machine for producing ice cream and similar. In more detail, the present invention relates to a horizontal-axis batch-freezer machine for producing artisan ice cream and the like. Use to which the following disclosure will make explicit reference without thereby losing in generality. The invention is defined by the appended claims.

### BACKGROUND ART

As is known, horizontal-axis batch-freezer machines normally used to produce artisan ice cream are provided with a rigid and substantially parallelepipedal-shaped, outer casing which is usually provided with ground-resting wheels, and moreover comprise: a cylindrical-shaped working chamber or compartment extending horizontally inside the machine, starting from the front face of the outer casing; a closing door which is hinged to the front face of the outer casing, so as to be able to rotate about a vertical reference axis to and from an operating position in which the door closes the mouth of the working chamber in a fluid-tight manner; and an electrically-operated, heat-pump refrigeration circuit which is accommodated inside the outer casing and is capable of bringing and maintaining the working chamber and its contents to/at a temperature usually between -10°C and -35°C.

The above-mentioned batch-freezer machines additionally comprise an oblong-shaped mixing member, which is fixed in an axially rotatable manner inside the working chamber; and an electrically-operated motor assembly which is accommodated inside the casing and is capable of driving into rotation the mixing member about its longitudinal axis, so as to continuously mix the semi-solid mixture formed inside the working chamber.

The ingredients needed to produce artisan ice cream are generally poured into the working chamber through a hopper incorporated in the upper part of the closing door; whereas the ice cream is extracted from the working chamber through a large, manually openable and closable discharge outlet that is usually located in the lower part of the closing door.

Lastly, most of the horizontal-axis batch-freezer machines are provided with a large horizontal shelf that juts out cantilevered from the front face of the outer casing, spaced beneath the mouth of the working chamber, and is structured to support the large, elongated rectangular in shape, ice-cream display pans which are normally used in refrigerated display counters and which are arranged by the ice-cream person underneath the discharge outlet of the door to collect the ice-cream coming out of the working chamber.

Since the ice-cream person often needs to vigorously mix the ice-cream just fallen into the ice-cream pan and/or pour other ingredients into the ice-cream pan while the ice-cream is falling into the pan, the most recent horizontal-axis batch-freezer machines have, on the upper part of the shelf, a locking shape/template which has a shape complementary to the base of the ice-cream pan so as to prevent any horizontal movement of the ice-cream pan on the shelf.

In fact, even the smallest horizontal movement of the ice-cream pan can hinder the ice-cream person's work and/or make the pan to fall from the shelf.

Unfortunately, the shape and dimensions of the ice-cream display pans vary according to the nominal capacity of the pan and, often, also according to the manufacturer of the pan, therefore the ice-cream person, before extracting/ discharging the ice-cream from the batch-freezer machine, has to place on the shelf of the machine the locking template that each time perfectly fits with the dimensions of the ice-cream pan(s) used, at that time, to collect the ice-cream coming out of the batch-freezer machine.

ITMI20010144 A1 discloses a batch-freezer machine having, on the horizontal shelf protruding from the front wall of the same machine, a manually-operated locking device adapted to firmly lock the ice-cream pan onto said shelf.

The arrangement of the manually-operated locking device on the horizontal shelf, however, renders the same locking device difficult to clean.

### DISCLOSURE OF INVENTION

Aims of the present invention is to simplify the operations that the ice-cream person must carry out before extracting/discharging the ice cream from the batch-freezer machine.

In compliance with these aims, according to the present invention there is provided a batch-freezer machine for producing ice cream and the like as defined in Claim 1 and preferably, though not necessarily, in any one of the dependent claims.

### BRIEF DESCRIPTION OF THE DRAWINGS

The present invention will now be described with reference to the accompanying drawings, which illustrate a non-limiting embodiment thereof, wherein:
- Figure 1 is a perspective view of a batch-freezer machine for producing artisan ice cream and the like, realized according to the teachings of the present invention, with parts removed for clarity's sake;

- Figure 2 illustrates, in enlarged scale, the front part of the batch-freezer machine shown in Figure 1, with parts removed for clarity's sake;
- Figure 3 is a front view of the upper part of the pan-holder shelf of the batch-freezer machine shown in Figure 1, with parts in section and parts removed for clarity's sake; whereas
- Figure 4 is a perspective and enlarged view of the front part of an alternative embodiment of the batch-freezer machine shown in Figure 1, with parts removed for clarity's sake.

### BEST MODE FOR CARRYING OUT THE INVENTION

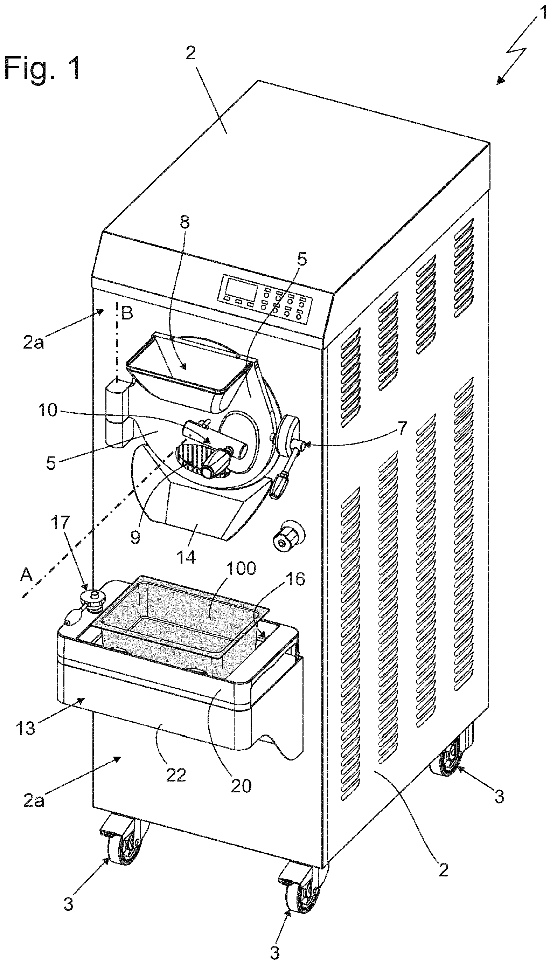

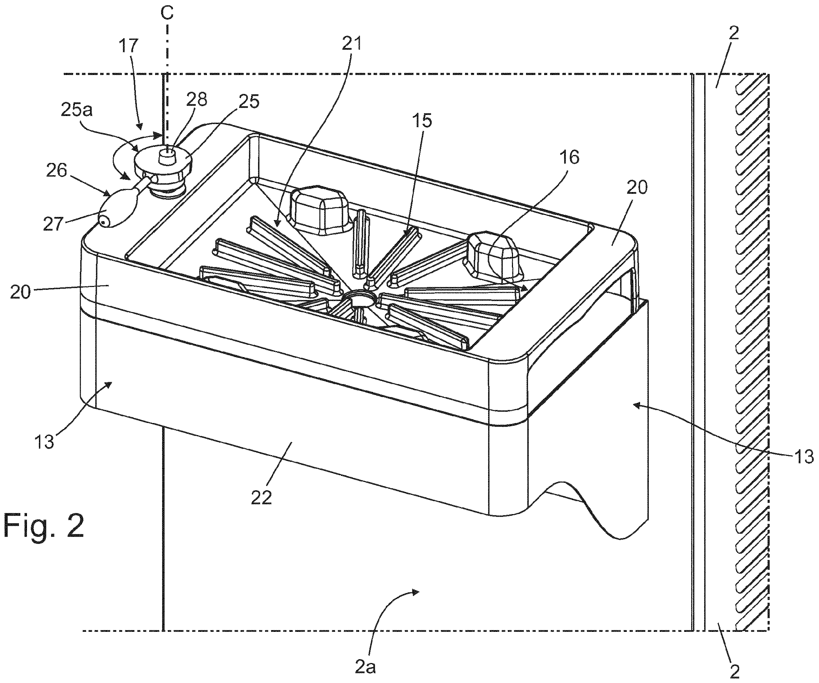

With reference to Figures 1 and 2, number 1 denotes as a whole a horizontal-axis batch-freezer machine particularly suitable for producing artisan ice cream, sorbets and the like.

The batch-freezer machine 1 is provided with an outer box-like casing 2 with a rigid, self-supporting structure preferably also substantially parallelepipedal in shape, which is preferably, though not necessarily, provided with ground-resting wheels 3, and additionally comprises: a working chamber or compartment (not shown in the figures), which is substantially cylindrical in shape and extends inside the casing 2, starting from the front wall 2a of the casing, while remaining locally substantially coaxial with a reference axis A, preferably substantially horizontal and optionally also substantially perpendicular to the front wall 2a of outer casing 2; a removable door 5 which is structured to selectively close the opening/inlet of the working chamber substantially in a fluid-tight manner; and an electrically-operated refrigerating assembly (not shown in the figures) preferably of the heat-pump type, which is arranged inside the box-like casing 2 and is structured so as to bring and maintain the working chamber and the contents thereof to/at a freezing temperature lower than +0°C and preferably ranging between -10°C and -35°C.

In more detail, the door 5 is preferably mounted movably on the box-like casing 2 so as to be manually positionable to close the mouth of the working chamber.

In the example shown, in particular, the working chamber preferably has a capacity ranging between 5 and 30 litres.

On the other hand, the door 5 preferably has a substantially discoidal structure, and is preferably flag hinged to the front wall 2a of outer casing 2, roughly beside the mouth of the working chamber, so as to be able to freely rotate about a preferably, though not necessarily, vertical reference axis B, to and from a closing position (see Figure 1) in which the door 5 abuts against the front wall 2a, at the mouth/inlet of the working chamber, so as to close/seal the mouth of the working chamber in a fluid-tight manner.

With reference to Figure 1, preferably the batch-freezer machine 1 is moreover provided with a manually-operated mechanical locking device 7 which is located on the front wall 2a of casing 2, beside to the mouth of the working chamber, and is structured to selectively lock the door 5 firmly in the closed position, so as to hermetically seal the mouth of the working chamber.

In addition, the door 5 is preferably provided with a ingredients feeding duct and an ice-cream extraction duct, hereinafter denoted by the reference numbers 8 and 9, which extend through the body of door 5 vertically spaced one above the other, and are respectively structured/dimensioned so as to allow the user, when the door 5 is in the closed position, to pour/introduce into the working chamber the ingredients needed to produce the ice-cream and to extract the ice cream from the working chamber at the end of the batch-freezing process.

In more detail, the upper duct 8 allows to pour/ introduce into the working chamber the ingredients needed to produce the ice-cream, whereas the lower duct 9 allows the ice cream to slowly flow out of the working chamber.

Preferably, the upper duct 8 moreover has its starting segment substantially in the form of a hopper and ends approximately at the centre of door 5, so as to channel the ingredients needed to produce the ice cream roughly at the centre of the mouth of the working chamber behind it.

Optionally, the door 5 additionally also includes a removable lid (not shown in the figures) which is adapted to close the upper opening of the ingredients feeding duct 8.

On the other hand, the lower duct 9 roughly ends at the bottom of the perimeter rim of the mouth of the working chamber and incorporates a manually-operated shut-off valve 10, preferably of the guillotine type, which is capable of closing/sealing duct 9 substantially in fluid-tight manner.

The door 5 is a component already widely known in the batch-freezer machines field and therefore won't be further described.

Preferably, the batch-freezer machine 1 moreover comprises: an oblong-shaped mixing member (not shown in the figures) which extends inside the working chamber preferably while remaining substantially coaxial with the longitudinal axis A of the chamber, can rotate about its longitudinal axis, and is structured so as to mix the semi-solid mixture formed inside the working chamber during the batch-freezing process; and an electrically-operated motor assembly (not shown in the figures) which is located inside the rigid casing 2, adjacent to the working chamber, and is mechanically connected to the mixing member so as to drive the mixing member into rotation inside the working chamber.

In more detail, the mixing member is preferably fixed inside the working chamber in easy removable manner by the user, and is preferably provided with one or more peripheral spatulas that are adapted to scrape the inner cylindrical surface of the working chamber so as to continuously remove the semi-solid mixture attaching/adhering to the wall of the working chamber during the batch-freezing process.

Even the mixing member is a component already widely known in the batch-freezing machine sector and therefore won't be further described.

With reference to Figures 1 and 2, the batch-freezer machine 1 additionally comprises a protruding shelf 13 that juts out cantilevered from the front wall 2a of outer casing 2 substantially horizontally and is vertically spaced beneath the mouth of the working chamber; and optionally also a conveyor chute 14 that juts out cantilevered from the front wall 2a of casing 2, immediately underneath the mouth of the working chamber.

The shelf 13 is preferably substantially rectangular in shape and is structured and dimensioned to support/sustain any known type of display ice-cream pan 100, i.e. a large ice-cream pan substantially rectangular in shape, of the type traditionally used in refrigerated display counters for ice-cream parlours.

In more detail, the shelf 13 is provided at the top with a substantially horizontal supporting surface 15, on which the ice-cream pan 100 is adapted to rest.

The chute 14, in turn, is preferably tapered toward its outlet mouth and is inclined downwards so that it can collect and convey, inside the ice-cream pan 100 momentarily resting on the underlying shelf 13, the ice cream flowing out of the working chamber of batch-freezer machine 1, or rather from the ice-cream extraction duct 9 of door 5.

With reference to Figures 1, 2 and 3, differently from currently-known batch-freezer machines, the shelf 13 is additionally provided with a raised side shoulder 16 that stands up/raises, preferably substantially vertically, above the supporting surface 15, on a side of supporting surface 15, and is unmovable with respect to the supporting surface 15; and with a manually-operated locking device 17, which is placed above the supporting surface 15 on a side of the supporting surface 15 opposite to that of the raised side shoulder 16, and is selectively adapted to push and hold the ice-cream pan 100 in abutment against the raised side shoulder 16, so as to immobilise the ice-cream pan 100 on the shelf 13.

In other words, the raised side shoulder 16 and the locking device 17 are located on the shelf 13, on opposite sides of the supporting surface 15.

Preferably, the supporting surface 15 is moreover located substantially at the centre of the shelf 13.

In more detail, the locking device 17 is preferably spaced above the supporting surface 15, and is adapted to selectively abut against the side wall of the ice-cream pan 100 momentarily resting on supporting surface 15 of the shelf 13, and then to push the ice-cream pan 100 towards the raised side shoulder 16, more or less parallely to the supporting surface 15, so as to bring and push the ice-cream pan 100, or rather the side wall of the ice-cream pan 100, in abutment against the raised side shoulder 16, so as to block/ immobilise the ice-cream pan 100 on the supporting surface 15.

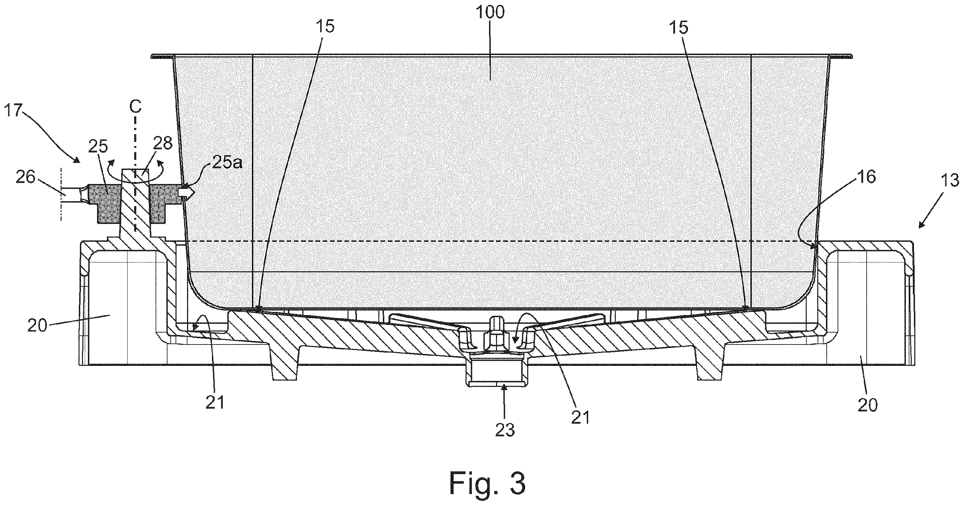

With reference to Figures 2 and 3, the shelf 13 in addition includes a pan-holder tray 20 which is preferably substantially rectangular in shape, and is provided, on its upper face and preferably also substantially at the centre of the same face, with a large concave seat or compartment 21 that is suitably shaped and dimensioned to accommodate the base/lower part of any type of ice-cream pan 100.

The concave seat or compartment 21 of the pan-holder tray 20, in addition, is shaped and dimensioned so as to accommodate the base of any type of display ice-cream pan 100 with a little mechanical clearance at the sides thereof, so that the ice-cream pan 100 rests stably on the bottom of the concave seat or compartment 21.

Accordingly, the bottom of concave seat or compartment 21 forms the supporting surface 15 of the shelf 13.

In more detail, the shelf 13 comprises: preferably, a rigid supporting framework 22 that juts out cantilevered from, and is rigidly integral with, the front wall 2a of outer casing 2; and a pan-holder tray 20 distinct and separated from the supporting framework 22, which is preferably substantially rectangular in shape and is located on top of the supporting framework 22 in a substantially horizontal position.

The pan-holder tray 20 is furthermore fixed /fitted to the supporting framework 22 in a rigid and stable, though easily removable manner.

In addition, the supporting framework 22 is preferably made of metallic material, whereas the pan-holder tray 20 is preferably made of plastic material.

In the example shown, in particular, the shelf 13 is designed to accommodate and support/sustain a series of ice-cream pans 100 of different sizes, and the concave seat or compartment 21 of the pan-holder tray 20 approximates by excess the shape of the base of the largest ice-cream pan 100.

In other words, the seat or compartment 21 is preferably substantially rectangular in shape and is preferably shaped and dimensioned to accommodate the base of the largest ice-cream pan 100, with a little mechanical clearance along the perimeter.

Lastly, on the bottom of the concave seat or compartment 21 of pan-holder tray 20 there is preferably a drain hole 23 that prevents any liquid from stagnating inside the concave seat or compartment 21.

With reference to Figures 2 and 3, the manually-operated locking device 17 is located on the pan-holder tray 20, and is adapted to selectively transversally push the ice-cream pan 100 so as to bring the ice-cream pan 100 in abutment against the side wall of the concave seat or compartment 21, so as to block/immobilise the ice-cream pan 100 inside the seat or compartment 21. Therefore, the side wall of concave seat or compartment 21 forms the raised side shoulder 16 of the shelf 13.

In more detail, the locking device 17 is located on the pan-holder tray 20, at a side of the concave seat or compartment 21, and is adapted to selectively transversally push the ice-cream pan 100 against the opposite side of the same concave seat or compartment 21.

The section of the side wall of the concave seat or compartment 21 located on the opposite side of the locking device 17, therefore, forms the raised side shoulder 16 of shelf 13.

With reference to Figures 2 and 3, preferably the locking device 17 furthermore comprises: a bushing 25 which is provided with a substantially lobe-shaped, protruding eccentric 25a, i.e. a flat cam, and is fixed on the shelf 13, beside the supporting surface 15, with the capability of freely rotating about a reference axis C preferably substantially perpendicular to the supporting surface 15, i.e. substantially vertical; and an oblong-shaped command lever 26 that juts out cantilevered from the bushing 25 substantially perpendicular to the axis of the bushing, i.e. axis C, and preferably has, at its distal end, a handle or knob 27.

By acting on the command lever 26, the user can manually rotate the bushing 25 about the axis C, so as to arrange and push the protruding eccentric 25a of the bushing 25 against the side wall of the ice-cream pan 100.

In more detail, the bushing 25 is preferably fixed in axially rotatable manner on the pan-holder tray 20, beside of the concave seat or compartment 21.

In the example shown, in particular, the bushing 25 is preferably made of plastic material, and is preferably fitted in axially rotatable manner on a supporting pin 28 which, in turn, sticks out upwards from the pan-holder tray 20, beside the concave seat or compartment 21, and is preferably made in one piece with the pan-holder tray 20.

Clearly, the supporting pin 28 juts out cantilevered from the pan-holder tray 20 while remaining coaxial with the axis C.

The command lever 26, in tunr, is preferably made of metallic material, whereas the handle or knob 27 is preferably made of plastic material.

Clearly, in a different embodiment the axis of rotation C of the bushing 25 and of the command lever 26 could also be substantially parallel to the supporting surface 15 of shelf 13, i.e. substantially horizontal, and preferably also perpendicular to the front wall 2a of outer casing 2.

General operation of the multifunctional batch-freezer machine 1 can be easily deduced from the above description.

The ice-cream person places the ice-cream pan 100 inside the concave seat or compartment 21 of pan-holder tray 20 and then rotates the command lever 26 about axis C, so as to bring the protruding eccentric 25a of bushing 25 in abutment against the side wall of the ice-cream pan 100 and then to push the whole ice-cream pan 100 against the section of the side wall of concave seat or compartment 21 opposite with respect to the locking device 17.

The shape of the protruding eccentric 25a of bushing 25 moreover allows the locking device 17 to automatically adapt to the size/dimensions of the ice-cream pan 100 temporarily placed resting on the shelf 13.

The advantages due to the presence, on the sides of the supporting surface 15 of shelf 13, of the raised side shoulder 16 and of the locking device 17 are evident.

The shelf 13 can support and lock in place a plurality of sizes of ice-cream pans 100, without the need for the ice-cream person/user to replace any component of the batch-freezer machine.

Moreover, the placement of the raised side shoulder 16 and of the locking device 17 on the pan-holder tray 20 allows the ice-cream pan locking system to be mounted/used also on the batch-freezer machines already on the market.

Clearly, the placement of the raised side shoulder 16 and of the locking device 17 on the pan-holder tray 20 allows the whole shelf 13 and its locking system to be cleaned up quickly.

It is finally clear that modifications and variations may be made to the batch-freezer machine 1 described above without however departing from the scope of the present claims.

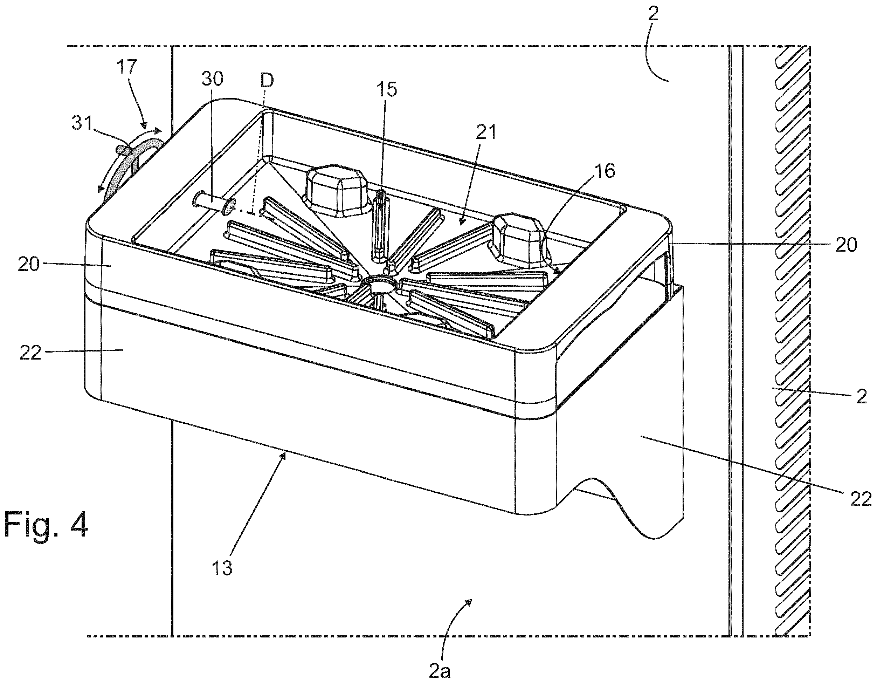

For example, with reference to Figure 4, in a different embodiment, the locking device 17 may comprise: a rectilinear rod 30 that extends coaxially with an axis D substantially parallel to the supporting surface 15 of the shelf 13, i.e. substantially horizontal, and optionally also substantially parallel to the front wall 2a of outer casing 2, and is screwed in a pass-through manner into a nut-body that stands up/raises above the supporting surface 15, beside the supporting surface 15, so as to jut out cantilevered within the periphery of the supporting surface 15; and a manually-operated command member that allows the ice-cream person/user to screw and unscrew the rectilinear rod 30 into the nut-body, so as to vary/adjust the length of the portion of the rod that protrudes cantilevered within the periphery of the supporting surface 15, and consequently press against the side wall of the ice-cream pan 100.

In more detail, in the example shown the rectilinear rod 30 is preferably screwed in pass-through manner into the wall of the pan-holder tray 20 delimiting the concave seat or compartment 21, so as to protrude cantilevered within the concave seat or compartment 21.

Preferably, the locking device 17 additionally also comprises a knob or handwheel 31, which is fixed/fitted in angularly rigid manner on the rectilinear rod 30, outside of the pan-holder tray 20, and allows the ice-cream person/user to rotate the rectilinear rod 30 clockwise and anticlockwise.

Acting on the knob or handwheel 31, the ice-cream person/user can therefore move the rectilinear rod 30 axially with respect to the pan-holder tray 20, so as to vary/adjust the length of the portion of the rod that protrudes cantilevered within the concave seat or compartment 21 and press the ice-cream pan 100 against the side wall of the concave seat or compartment 21, on the opposite side with respect to the rod 30.

## Claims

1. A batch-freezer machine (1) for producing ice cream and similar products, comprising: an outer casing (2) with a rigid and self-supporting structure; a working chamber that extends inside the outer casing (2), starting from the front wall (2a) of the casing; a removable door (5) that is adapted to selectively close, substantially in a fluid tight manner, the mouth of the working chamber; and a protruding shelf (13) that juts out cantilevered from the front wall (2a) of the outer casing (2) vertically spaced beneath the mouth of the working chamber, and is superiorly provided with a substantially horizontal supporting surface (15) on which a display ice-cream pan (100) is adapted to rest;
the batch-freezer machine (1) being **characterised in that** the protruding shelf (13) comprises: a supporting framework (22) that juts out cantilevered from, and is rigidly integral with, the front wall (2a) of said outer casing (2); a removable pan-holder tray (20), distinct and separated from the supporting framework (22), which is fitted in removable manner on the top of said supporting framework (22) and is provided, on the upper face thereof, with a concave seat or compartment (21) which is adapted to accommodate the lower part of said ice-cream pan (100), wherein the bottom of said concave seat or compartment (21) forms the supporting surface (15) of said shelf (13) and wherein a side wall of said concave seat or compartment (21) forms a raised side shoulder (16) that stands up/raises above the supporting surface (15), on a side of the same supporting surface (15); and a manually-operated locking device (17) which is placed on the pan-holder tray (20) above the supporting surface (15), on a side of said concave seat or compartment (21) opposite to that of the raised side shoulder (16), and is adapted to selectively transversally push and lock the ice-cream pan (100) momentarily resting on the supporting surface (15) of the shelf (13) in abutment against said raised side shoulder (16), so as to block/ immobilise the ice-cream pan (100) within said concave seat or compartment (21).

2. The batch-freezer machine according to Claim 1, wherein the pan-holder tray (20) is substantially rectangular in shape.

3. The batch-freezer machine according to Claim 1 or 2, wherein the pan-holder tray (20) is made of plastic material.

4. The batch-freezer machine according to any one of the preceding claims, wherein the pan-holder tray (20) has, on the bottom of the concave seat or compartment (21), a drain hole (23) that prevents any liquid from stagnating inside the same concave seat or compartment (21).

5. The batch-freezer machine according to any one of the preceding claims, wherein the manually-operated locking device (17) comprises: a bushing (25) which is provided with a protruding eccentric (25a) and is fixed on the supporting surface (15) of the shelf (13), beside of the supporting surface (15), with the capability of rotating about a given first reference axis (C); and an oblong-shaped command lever (26) that juts out cantilevered from the bushing (25) substantially perpendicular to said reference axis (C); the protruding eccentric (25a) of the bushing (25) being adapted to press against the side wall of the ice-cream pan (100).

6. The batch-freezer machine according to Claim 5, wherein the bushing (25) is made of plastic material.

7. The batch-freezer machine according to Claim 5 or 6, wherein the bushing (25) is fitted in axially rotatable manner on a supporting pin (28) that sticks out cantilevered and upwards from the pan-holder tray (20), beside of the concave seat or compartment (21).

8. The batch-freezer machine according to any one of the Claims from 1 to 4, wherein the manually-operated locking device (17) comprises: a rectilinear rod (30) that extends coaxially to a second reference axis (D) substantially parallel to the supporting surface (15) of the shelf (13), and is screwed in pass-through manner into a nut-body that stands up/raises above the supporting surface (15) of the shelf (13), beside the same supporting surface (15), so as to jut out cantilevered within the perimeter of the supporting surface (15); and a command member (31) that allows the user to screw and unscrew the rectilinear rod (30) in the nut-body, so as to vary/adjust the length of the portion of the rod that protrudes cantilevered within the perimeter of the supporting surface (15).

9. The batch-freezer machine according to Claim 8, wherein the rectilinear rod (30) is screwed in pass-through manner into the wall of the pan-holder tray (20) delimiting said concave seat or compartment (21), so as to protrude cantilevered within the same concave seat or compartment (21) .

## Patentansprüche

1. Chargengefriermaschine (1) zum Herstellen von Eiscreme und ähnlichen Produkten, umfassend: ein Außengehäuse (2) mit einer starren und selbsttragenden Struktur; eine Arbeitskammer, die sich innerhalb des Außengehäuses (2) erstreckt, und zwar beginnend von der Vorderwand (2a) des Gehäuses; eine entfernbare Tür (5), die angepasst ist, die Öffnung der Arbeitskammer selektiv auf im Wesentlichen fluid- bzw. flüssigkeitsdichte Weise zu verschließen; und eine hervorstehende Ablage (13), die freitragend von der Vorderwand (2a) des Außengehäuses (2) vertikal beabstandet unterhalb der Öffnung der Arbeitskammer herausragt und superior bzw. oben mit einer im Wesentlichen horizontalen Stütz- bzw. Trägerfläche (15) versehen ist, auf der eine Eiscreme-Ausstellungsschale (100) ruhen kann;
wobei die Chargen-Gefriermaschine (1) **dadurch gekennzeichnet ist, dass** die hervorstehende Ablage (13) umfasst: ein Stütz- bzw. Trägergerüst (22), das freitragend von der Vorderwand (2a) des Außengehäuses (2) hervorragt und starr mit dieser integral bzw. verbunden ist, eine abnehmbare Schalenhalterwanne (20), getrennt und beabstandet von dem Trägergerüst (22), die entfernbar auf die Oberseite des Trägergerüsts (22) gepasst ist und auf ihrer oberen Fläche mit einem konkaven Sitz oder Fach (21) versehen ist, das angepasst ist, den unteren Teil der Eiscremeschale (100) aufzunehmen, wobei der Boden des konkaven Sitzes oder Fachs (21) die Trägerfläche (15) der Ablage (13) bildet und wobei eine Seitenwand des konkaven Sitzes oder Fachs (21) eine erhöhte Seitenschulter (16) bildet, die auf einer Seite der Trägerfläche (15) auf dieser Trägerfläche (15) steht/über diese hinausragt, und eine manuell betätigte Verriegelungsvorrichtung (17), die auf der Schalenhalterwanne (20) über der Trägerfläche (15) auf einer Seite des konkaven Sitzes oder Fachs (21) gegenüberliegend bzw. entgegengesetzt zu derjenigen der erhöhten Seitenschulter (16) platziert ist und angepasst ist, die momentan auf der Trägerfläche (15) der Ablage (13) ruhende Eiscremeschale (100) selektiv quer in Anlage gegen die erhöhte Seitenschulter (16) zu schieben und zu verriegeln, um die Eiscremeschale (100) innerhalb des konkaven Sitzes oder Fachs (21) zu blockieren/immobilisieren.

2. Chargengefriermaschine nach Anspruch 1, wobei die Schalenhalterwanne (20) eine im Wesentlichen rechteckige Form aufweist.

3. Chargengefriermaschine nach Anspruch 1 oder 2, wobei die Schalenhalterwanne (20) aus Kunststoffmaterial hergestellt ist.

4. Chargengefriermaschine nach einem der vorhergehenden Ansprüche, wobei die Schalenhalterwanne (20) an der Unterseite des konkaven Sitzes oder Fachs (21) ein Abflussloch (23) aufweist, das verhindert, dass Fluid bzw. Flüssigkeit im Inneren des konkaven Sitzes oder Fachs (21) stagniert.

5. Chargengefriermaschine nach einem der vorhergehenden Ansprüche, wobei die manuell betätigte Verriegelungsvorrichtung (17) umfasst: eine Buchse (25), die mit einem hervorstehenden Exzenter (25a) versehen ist und an bzw. auf der Trägerfläche (15) der Ablage (13) neben bzw. an der Seite der Trägerfläche (15) befestigt ist, und zwar mit der Fähigkeit, sich um eine vorgegebene erste Referenzachse (C) zu drehen; und einen länglich geformten Befehls- bzw. Steuerhebel (26), der freitragend von der Buchse (25) im Wesentlichen senkrecht zu der Referenzachse (C) hervorragt; wobei der hervorstehende Exzenter (25a) der Buchse (25) angepasst ist, gegen die Seitenwand der Eiscremeschale (100) zu drücken.

6. Chargengefriermaschine nach Anspruch 5, wobei die Buchse (25) aus Kunststoffmaterial hergestellt ist.

7. Chargengefriermaschine nach Anspruch 5 oder 6, wobei die Buchse (25) axial drehbar an bzw. auf einen Stütz- bzw. Trägerstift (28) gepasst ist, der freitragend und nach oben aus der Schalenhalterwanne (20) neben dem konkaven Sitz oder Fach (21) bzw. an der Seite davon herausragt.

8. Chargengefriermaschine nach einem der Ansprüche 1 bis 4, wobei die manuell betätigte Verriegelungsvorrichtung (17) umfasst: eine geradlinige Stange (30), die sich koaxial zu einer zweiten Referenzachse (D) im Wesentlichen parallel zu der Trägerfläche (15) der Ablage (13) erstreckt und auf durchgängige bzw. durchtretende Weise in einen Mutterkörper eingeschraubt ist, der auf der Trägerfläche (15) der Ablage (13) steht/über diese hinausragt, und zwar neben bzw. an der Seite dieser Trägerfläche (15), so dass er freitragend innerhalb des Umfangs der Trägerfläche (15) herausragt; und ein Befehls- bzw. Steuerglied (31), das es dem Benutzer ermöglicht, die geradlinige Stange (30) in den Mutterkörper einzuschrauben und herauszuschrauben, um die Länge des Abschnitts der Stange zu variieren/einzustellen, der freitragend innerhalb des Umfangs der Trägerfläche (15) herausragt.

9. Chargengefriermaschine nach Anspruch 8, wobei die geradlinige Stange (30) auf durchgängige bzw. durchtretende Weise in die Wand der Schalenhalterwanne (20) eingeschraubt ist, die den konkaven Sitz oder das konkave Fach (21) begrenzt, so dass sie freitragend innerhalb des konkaven Sitzes oder Fachs (21) herausragt.

## Revendications

1. Machine de congélation par lots (1) pour la production de crème glacée et de produits similaires, comprenant : une enveloppe extérieure (2) avec une structure rigide et autoportante ; une chambre de travail qui s'étend à l'intérieur de l'enveloppe extérieure (2), à partir de la paroi avant (2a) de l'enveloppe ; une porte amovible (5) qui est adaptée pour fermer sélectivement, de manière pratiquement étanche, l'embouchure de la chambre de travail ; et une étagère en saillie (13) qui sort en porte-à-faux de la paroi avant (2a) de l'enveloppe extérieure (2), espacée verticalement sous l'embouchure de la chambre de travail, et qui est dotée supérieurement d'une surface de support sensiblement horizontale (15) sur laquelle un bac à glace (100) est destiné à reposer ;
la machine de congélation par lots (1) étant **caractérisée en ce que** l'étagère en saillie (13) comprend : un cadre de support (22) qui fait saillie en porte-à-faux à partir de la paroi avant (2a) de ladite enveloppe extérieure (2) et qui est rigidement solidaire de cette dernière ; un plateau porte-bac amovible (20), distinct et séparé du cadre de support (22), qui est monté de manière amovible sur le dessus dudit cadre de support (22) et qui est pourvu, sur sa face supérieure, d'un siège ou compartiment concave (21) adapté pour accueillir la partie inférieure dudit bac à glace (100), dans lequel le fond dudit siège ou compartiment concave (21) forme la surface de support (15) de ladite étagère (13) et dans lequel une paroi latérale dudit siège ou compartiment concave (21) forme un épaulement latéral surélevé (16) qui s'élève au-dessus de la surface de support (15), sur un côté de la même surface de support (15) ; et un dispositif de verrouillage manuel (17) placé sur le plateau porte-bac (20) au-dessus de la surface de support (15), sur un côté dudit siège ou compartiment concave (21) opposé à celui de l'épaulement latéral surélevé (16), et qui est adapté pour pousser et verrouiller transversalement de manière sélective le bac à glace (100) reposant momentanément sur la surface de support (15) de l'étagère (13) en butée contre ledit épaulement latéral surélevé (16), de manière à bloquer/immobiliser le bac à glace (100) à l'intérieur dudit siège ou compartiment concave (21).

2. Machine de congélation par lots selon la revendication 1, dans laquelle le plateau porte-bac (20) est de forme sensiblement rectangulaire.

3. Machine de congélation par lots selon la revendication 1 ou 2, dans laquelle le plateau porte-bac (20) est en matière plastique.

4. Machine de congélation par lots selon l'une quelconque des revendications précédentes, dans laquelle le plateau porte-bac (20) présente, sur le fond du siège ou compartiment concave (21), un trou de drainage (23) qui empêche tout liquide de stagner à l'intérieur du même siège ou compartiment concave (21)

5. Machine de congélation par lots selon l'une quelconque des revendications précédentes, dans laquelle le dispositif de verrouillage manuel (17) comprend : une bague (25) pourvue d'un excentrique en saillie (25a) et fixée sur la surface de support (15) de l'étagère (13), à côté de la surface de support (15), pouvant tourner autour d'un premier axe de référence donné (C) ; et un levier de commande de forme oblongue (26) qui sort en porte-à-faux de la bague (25) sensiblement perpendiculairement audit axe de référence (C) ; l'excentrique en saillie (25a) de la bague (25) pouvant appuyer contre la paroi latérale du bac à glace (100).

6. Machine de congélation par lots selon la revendication 5, dans laquelle la bague (25) est en matière plastique.

7. Machine de congélation par lots selon la revendication 5 ou 6, dans laquelle la bague (25) est montée de manière à pouvoir tourner axialement sur un axe de support (28) qui dépasse en porte-à-faux et vers le haut du plateau porte-bac (20), à côté du siège ou du compartiment concave (21).

8. Machine de congélation par lots selon l'une quelconque des revendications de 1 à 4, dans laquelle le dispositif de verrouillage manuel (17) comprend : une tige rectiligne (30) qui s'étend coaxialement à un second axe de référence (D) sensiblement parallèle à la surface de support (15) de l'étagère (13), et qui est vissée de manière traversante dans un corps-écrou qui se dresse/se lève au-dessus de la surface de support (15) de l'étagère (13), à côté de la même surface de support (15), de manière à faire saillie en porte-à-faux dans le périmètre de la surface de support (15) ; et un élément de commande (31) qui permet à l'utilisateur de visser et dévisser la tige rectiligne (30) dans le corps d'écrou, de manière à varier/régler la longueur de la partie de la tige qui dépasse en porte-à-faux à l'intérieur du périmètre de la surface de support (15).

9. Machine de congélation par lots selon la revendication 8, dans laquelle la tige rectiligne (30) est vissée de manière traversante dans la paroi du plateau porte-bac (20) délimitant ledit siège ou compartiment concave (21), de manière à faire saillie en porte-à-faux à l'intérieur du même siège ou compartiment concave (21).
